# EUROPÄISCHE PATENTANMELDUNG

(11) **EP 0 992 796 A2**
(43) Veröffentlichungstag der Anmeldung: **12.04.2000**
(21) Anmeldenummer: 99119023.2
(22) Anmeldetag: 29.09.1999
(51) Int. Cl.: G01N 35/10, B01L 3/02

(54) **Verfahren und Vorrichtung zur selektiven Pipettierung mit Multikanalpipetten**

(30) Priorität: 05.10.1998 DE 19845717
(71) Anmelder: EASy-LAB GmbH, 25524 Itzehoe (DE)
(72) Erfinder: Thrull, Ralf H., Dr., 25524 Itzehoe (DE); Diettrich, Holger, 25524 Itzehoe (DE)
(74) Vertreter: Thomas, Götz

(57) **Zusammenfassung**

Die Erfindung betrifft ein Pipettierverfahren und eine Pipettiervorrichtung zum selektiven Entnehmen von Flüssigkeit aus beliebigen, nebeneinander angeordneten Entnahmebehältern (48, 52), wobei ein beweglicher Pipettenträger (6) mit einer Mehrzahl von nebeneinander angeordneten Pipetten (8), deren Spitzen (26) sämtlich in einer Ebene liegen, über die Entnahmebehälter (48, 52) bewegt wird, und nach einer Annäherung der Pipettenspitzen (26) und der Flüssigkeitsspiegel (60) in frei auswählbaren Entnahmebehältern (48, 52) gleichzeitig Flüssigkeit aus diesen Behältern angesaugt wird. Um die Vorteile einer selektiven Einzelpipettierung auf einfache Weise mit den Vorteilen einer Multikanalpipettierung zu kombinieren, wird erfindungsgemäß vorgeschlagen, daß in den ausgewählten Entnahmebehältern (48, 52) und in den übrigen Entnahmebehältern (48, 52) unterschiedliche Flüssigkeitsspiegel (60) eingestellt werden, die über bzw. unter einem vorgegebenen Niveau (N) liegen, und daß die über die Entnahmebehälter (48, 52) bewegten Pipetten (8) mit ihren Ansaugspitzen (26) gemeinsam auf das vorgegebene Niveau (N) abgesenkt werden, um sie mit der Flüssigkeit in den ausgewählten Entnahmebehältern (48, 52) in Kontakt zu bringen.

## Beschreibung

Die Erfindung betrifft ein Pipettierverfahren zum selektiven Entnehmen von Flüssigkeit aus beliebigen Entnahmebehältern in einer Vielzahl von nebeneinander angeordneten Entnahmebehältern, bei dem ein beweglicher Pipettenträger mit einer Mehrzahl von nebeneinander angeordneten Pipetten, deren Ansaugspitzen sämtlich in einer Ebene liegen, über die Entnahmebehälter bewegt wird, und bei dem zum gleichzeitigen Ansaugen von Flüssigkeit aus frei auswählbaren Entnahmebehältern die Flüssigkeitsspiegel der ausgewählten Entnahmebehälter einerseits und die Ansaugspitzen der über die Entnahmebehälter bewegten Pipetten andererseits mindestens bis zum Kontakt der Flüssigkeitsspiegel und der Ansaugspitzen gesteuert aneinander angenähert werden. Die Erfindung betrifft weiter eine Pipettiervorrichtung zum selektiven Entnehmen von Flüssigkeit aus beliebigen Entnahmebehältern einer Vielzahl von nebeneinander angeordneten Entnahmebehältern, bei der ein beweglicher Pipettenträger mit einer Mehrzahl von nebeneinander angeordneten Pipetten, deren Ansaugspitzen sämtlich in einer Ebene liegen, über die Entnahmebehälter bewegbar ist, und bei der zum gleichzeitigen Ansaugen von Flüssigkeit aus frei auswählbaren Entnahmebehältern eine gesteuerte gegenseitige Annäherung der Flüssigkeitsspiegel der ausgewählten Entnahmebehälter einerseits und der Ansaugspitzen der über die Entnahmebehälter bewegten Pipetten andererseits mindestens bis zum Kontakt der Flüssigkeitsspiegel und der Ansaugspitzen erfolgt.

In der Labormedizin wurden in den vergangenen Jahren Untersuchungsverfahren entwickelt, die es gestatten, eine Vielzahl von Proben gleichzeitig zu untersuchen. Bei diesen Untersuchungen wird zuerst ein vorgegebenes Probenvolumen in eine Reaktionsmulde einer Mikrotiterplatte pipettiert, bevor anschließend ein oder mehrere Reaktionspartner in vorgegebenen Mengen in die Mulde pipettiert und mit der Probe zur Reaktion gebracht werden. Nach Abschluß der Reaktion kann dann zur Ermittlung bestimmter Parameter der Probe zum Beispiel die Lichtextinktion der jeweiligen Reaktionsprodukte mit Hilfe eines Photometers gemessen werden.

Um gleiche Pipettiervorgänge, zum Beispiel das Pipettieren der Probenvolumina oder das Pipettieren eines für sämtliche Proben identischen Reaktionspartners in die 96 (oder 96 x 2²ⁿ (n=1,2, 3...)) Reaktionsmulden handelsüblicher Mikrotiterplatten zu einem Arbeitsschritt zusammenzufassen und zu vereinfachen, wurden Pipettiervorrichtungen mit Multikanalpipetten entwickelt, bei denen auf einem horizontal und vertikal beweglichen Pipettenträger eine Mehrzahl (2N, N=1,2,3...48 x 2²ⁿ) von Pipetten oder Kapillaren angeordnet sind, die alle gleichzeitig betätigt werden, um Flüssigkeit aufzunehmen oder abzugeben. Die Ansaugspitzen dieser Pipetten liegen stets in einer Ebene, so daß die Pipettenspitzen ohne die Gefahr eines Anstoßens zum Beispiel bis in eine geringe Höhe über den Boden der Reaktionsmulden abgesenkt werden können. Der Effizienzgewinn bei derartigen Multikanalpipetten ist direkt proportional zu der Zahl der Pipetten oder Kapillaren auf dem Pipettenträger. Bei neueren Pipettiervorrichtungen sind auf dem Pipettenträger 96 Pipetten angebracht, deren Abstand und Anordnung dem Abstand und der Anordnung der 96 Reaktionsmulden auf den handelsüblichen Mikrotiterplatten entsprechen, so daß es möglich ist, ein zuvor aus einem großen Reagensbehälter angesaugtes Reagens in alle 96 Reaktionsmulden der Mikrotiterplatte gleichzeitig zu pipettieren.

Jedoch wäre es für bestimmte Untersuchungen wünschenswert, mit derselben Pipettiervorrichtung zum Beispiel ein bestimmtes Reagens nur in eine frei wählbare Teilmenge der Reaktionsmulden zu pipettieren, indem das Reagens nur in eine entsprechende Teilmenge der Pipetten angesaugt wird. Dies wäre zwar grundsätzlich durch eine selektive Ansaugung möglich, bei der das Reagens nur in diejenigen Pipetten gesaugt wird, deren Anordnung derjenigen der ausgewählte Teilmenge der Reaktionsmulden entspricht. Da die unbenutzten Pipetten jedoch ebenfalls in das Reagens eintauchen, kann durch diese Vorgehensweise allerdings eine unerwünschte Kontamination der Proben durch Verschleppung von an den Pipettenspitzen anhaftendem Reagens nicht sicher verhindert werden.

Weiter wäre es wünschenswert, dieselbe Pipettiervorrichtung auch zum selektiven Pipettieren unterschiedlicher Flüssigkeiten einzusetzen, wobei zum Beispiel in zwei benachbarten Reihen von Reagensbehältern enthaltene unterschiedliche Flüssigkeiten gleichzeitig aus den Reagensbehältern entnommen und in zwei benachbarte Reihen von Reaktionsmulden der Mikrotiterplatten abgegeben werden sollen, und/oder zum Pipettieren unterschiedlicher Flüssigkeitsmengen bei jeweils identischem Ansaugvolumen der Pipetten, z.B. zur Herstellung von Verdünnungsreihen.

Aus der EP 0 226 867 ist bereits eine Pipettiervorrichtung der eingangs genannten Art bekannt, bei der Flüssigkeiten aus 96 in einem Array nebeneinander in einer Aufnahmevorrichtung angeordneten Probenbehältern mit Hilfe einer horizontal beweglichen Zwölfkanal-Pipette in 96 Reaktionsmulden einer Mikrotiterplatte pipettiert werden können. Um zum einen ein Ansaugen von Flüssigkeit in die in vertikaler Richtung unverschiebbar auf dem Pipettenträger gehaltenen Pipetten zu ermöglichen, und um zum anderen sicherzustellen, daß trotz einer unterschiedlichen Höhe des Flüssigkeitsspiegels in den einzelnen Probenbehältern stets Flüssigkeit in die Pipetten angesaugt wird, schließt die Aufnahmevorrichtung eine Antriebseinrichtung ein, die es gestattet, jeweils 12 Probenbehälter in einer Reihe einzeln anzuheben, um den Flüssigkeitsspiegel in jedem dieser Behälter an die Ansaugspitze der darüber angeordneten Pipette anzunähern, bis beim Kontakt der Ansaugspitze mit der Flüssigkeit im Probenbehälter ein Steuerstromkreis durch elektrisch leitende Teile der Pipette und der Aufnahmevorrichtung geschlossen und dadurch die Aufwärtsbewegung des Probenbehälters angehalten wird. Wegen der getrennten Ansteuerung jeder Antriebseinrichtung mittels eines eigenen Steuerstromkreises ist jedoch bei der bekannten Pipettiervorrichtung der Aufwand für die Steuerung verhältnismäßig groß, wobei er bei einer größeren Anzahl von Pipetten auf dem Pipettenträger proportional zunimmt und damit einen möglichen Einsatz von Pipettenträgern mit 96 Pipetten verhindert oder zumindest stark einschränkt. Die maximale Anzahl von Pipetten auf dem Pipettenträger wird bei einer derartigen Vorrichtung auch noch dadurch eingeschränkt, daß die Abstände zwischen den Probenbehältern in der Aufnahmeeinrichtung größer sind als die Abstände zwischen den Reaktionsmulden auf der Mikrotiterplatte, so daß eine Einrichtung zum Vergrößern bzw. Verkleinern des Abstandes der Pipetten erforderlich ist, die bei einem Array von 96 Pipetten kaum oder nur mit sehr großem Aufwand realisierbar ist. Mit der bekannten Vorrichtung ist zwar eine selektive Pipettierung in eingeschränktem Umfang möglich, indem die Aufnahmevorrichtung nur teilweise mit Probenbehältern bestückt wird, jedoch ist auf diese Weise eine vollständige Automatisierung des Pipettiervorgangs nicht möglich.

Ausgehend hiervon liegt der Erfindung die Aufgabe zugrunde, bei einem Verfahren und einer Vorrichtung der eingangs genannten Art die Vorteile einer selektiven Einzelpipettierung auf einfache Weise mit den Vorteilen einer Multikanalpipettierung zu kombinieren und dabei eine Automatisierung des Pipettiervorgangs zu ermöglichen.

Diese Aufgabe wird erfindungsgemäß durch die in den Patentansprüchen 1 und 10 bzw. 11 und 19 angegebenen Merkmalskombinationen gelöst.

Der Erfindung liegt der Gedanke zugrunde, nicht nur entweder den Pipettenträger mit sämtlichen Pipetten oder einzelne Entnahmebehälter in vertikaler Richtung beweglich zu machen und mit einem Antrieb zu versehen, sondern einerseits einen vertikal beweglichen Pipettenträger mit Pipetten vorzusehen, deren Ansaugspitzen sich gemeinsam auf ein vorgegebenes Niveau absenken lassen, und zum anderen individuelle Entnahmebehälter, die eine selektive Einstellung des Flüssigkeitsspiegels gestatten. Dadurch kann bei den für eine Flüssigkeitsentnahme vorgesehenen ausgewählten Behältern ein höherer Flüssigkeitsspiegel eingestellt werden, der über dem vorgegebenen Niveau der abgesenkten Pipettenspitzen liegt, so daß beim anschließenden Ansaugen Flüssigkeit in diese Pipetten eintritt, während bei den übrigen Behältern ein Flüssigkeitsspiegel unter diesem Niveau eingestellt werden kann, so daß beim anschließenden Ansaugen Luft in die Pipetten eintritt und somit eine selektive Flüssigkeitsentnahme erfolgt. Der Ansaugvorgang erfolgt stets in sämtlichen Pipetten gemeinsam, vorzugsweise indem in sämtlichen Pipetten gleichzeitig ein Kolben angehoben wird.

Mit den erfindungsgemäßen Merkmalen können aus den ausgewählten Entnahmebehältern in verschiedene Pipetten unterschiedliche Flüssigkeitsvolumina angesaugt werden, gemäß einer bevorzugten Ausgestaltung der Erfindung am einfachsten dadurch, daß man die Ansaugspitzen der Pipetten auf dem vorgegebenen Niveau hält und ohne eine zwischenzeitliche Entleerung der Pipetten die ausgewählten Entnahmebehälter nacheinander unterschiedlich oft präsentiert, d.h. bei diesen Behältern unterschiedlich oft einen über dem vorgegebenen Niveau liegenden Flüssigkeitsspiegel einstellt. Beispielsweise können in aufeinanderfolgenden Schritten ein, zwei, drei, vier, fünf Behälter usw. präsentiert werden, wobei nach jeder Präsentation in die Pipetten über den präsentierten Behältern ein Volumeninkrement Flüssigkeit und in die Pipetten über den nicht präsentierten Behältern ein Volumeninkrement Luft angesaugt wird. Umgekehrt kann die Präsentation auch absteigend erfolgen, d.h. daß bei jedem Schritt den Pipetten ein Behälter weniger als beim vorangehenden Schritt präsentiert wird. Bei jedem Schritt kann die Differenz zu den zuvor präsentierten Behältern auch mehrere Behälter betragen.

Alternativ dazu kann eine Ansaugung unterschiedlicher Flüssigkeitsvolumina beispielsweise auch dadurch erfolgen, daß man bei einem Teil der ausgewählten Entnahmebehälter höhere und in einem Teil der Entnahmebehälter niedrigere Flüssigkeitsspiegel einstellt, wobei der Abstand der niedrigeren Flüssigkeitsspiegel vom vorgegebenen Niveau so klein gewählt wird, daß der Flüssigkeitsspiegel während des Ansaugens unter das vorgegebene Niveau absinkt, woraufhin in die zugehörigen Pipetten nur noch Luft angesaugt wird. Diese Alternative ist besonders dann vorteilhaft, wenn das Verhältnis zwischen den Querschnitten der Pipetten und der Entnahmebehälter relativ groß ist.

Die Ansaugung unterschiedlicher Flüssigkeitsvolumina kann besonders vorteilhaft zur Herstellung von Verdünnungsreihen eingesetzt werden, bei denen sich in einer Reihe von Reaktionsmulden der Mikrotiterplatte jeweils dasselbe Probenvolumen befindet, in das dann durch eine der vorgenannten erfindungsgemäßen Verfahrensvarianten unterschiedliche Mengen an Reagensflüssigkeit pipettiert werden.

Darüber hinaus können in den Pipetten auch Mischungen hergestellt werden, indem man einer oder mehreren Pipetten ohne eine zwischenzeitliche Entleerung derselben nacheinander Behälter mit unterschiedlichen Flüssigkeiten präsentiert, beispielsweise indem man einzelne, mehrere oder sämtliche Entnahmebehälter unter dem stationären Pipettenträger austauscht oder den Pipettenträger über eine andere Vielzahl von Entnahmebehältern mit unterschiedlichen Flüssigkeiten verfährt, bevor die angesaugten Volumina wieder aus den Pipetten abgegeben werden.

Das Absenken der Pipetten (oder alternativ des gesamten Pipettenträgers) erfolgt zweckmäßig, nachdem die ausgewählten Entnahmebehälter oder die darin enthaltene Flüssigkeit soweit angehoben worden sind, daß sich der Flüssigkeitsspiegel oberhalb des vorgegebenen Niveaus befindet. Alternativ können jedoch auch zuerst die Pipetten abgesenkt werden, bis sich ihre Spitzen auf dem vorgegebenen Niveau befinden, bevor die ausgewählten Entnahmebehälter oder die darin enthaltene Flüssigkeit bis über dieses Niveau angehoben werden. Eine dritte Alternative sieht vor, vor dem Absenken der Pipetten den Flüssigkeitsspiegel bei sämtlichen Entnahmebehältern auf ein Niveau oberhalb des vorgegebenen Niveaus zu bringen und dann die übrigen Entnahmebehälter, d.h. die nicht ausgewählten Entnahmebehälter, oder die Flüssigkeit in diesen Behältern soweit abzusenken, bis sich dort der Flüssigkeitsspiegel wieder unterhalb des vorgegebenen Niveaus befindet. Bei dieser dritten Alternative kann ein Teil der ausgewählten Behälter auch schon während des Ansaugens abgesenkt werden, bis sich der Flüssigkeitsspiegel unter dem vorgegebenen Niveau befindet, um dadurch ebenfalls unterschiedliche Flüssigkeitsmengen in die Pipetten anzusaugen.

Das Absenken der Pipetten oder des Pipettenträgers kann zweckmäßig durch einen Anschlag oder einen Endschalter begrenzt werden, der die Bewegung der Pipetten oder des Pipettenträgers anhält oder einen Stellmotor zum Absenken der Pipetten oder des Pipettenträgers abschaltet, sobald die Ansaugspitzen das vorgegebene Niveau erreicht haben. Alternativ kann der Stellmotor jedoch auch eine programmierbare elektronische Steuerung aufweisen, die eine Veränderung des vorgegebenen Niveaus durch Eingabe anderer Parameter in das Steuerprogramm gestattet.

Um sicherzustellen, daß stets Flüssigkeit aus den ausgewählten Entnahmebehältern angesaugt wird, und gleichzeitig zu verhindern, daß die Ansaugspitzen der Pipetten bei der Annäherung an die Entnahmebehälter gegen einen Boden derselben anschlagen, ist weiter vorgesehen, zumindest die ausgewählten Entnahmebehälter bis zu einer vorbestimmten Mindestfüllhöhe mit Flüssigkeit zu befüllen und dann den Flüssigkeitsspiegel in diesen Behältern so einzustellen, daß ihr Boden einen Abstand von der Ebene der Ansaugspitzen der abgesenkten Pipetten aufweist, der einen vorbestimmten Mindestabstand nicht unterschreitet, jedoch kleiner als die Mindestfüllhöhe ist.

Dort, wo sowohl die ausgewählten Entnahmebehälter als auch die übrigen Entnahmebehälter vor der Entnahme Flüssigkeit enthalten, liegen die Flüssigkeitsspiegel in diesen Behältern vorzugsweise stets innerhalb eines vorbestimmten Bereichs, d.h. zwischen einer oberen Höchstfüllmenge und einer unteren Mindestfüllmenge, und dann wird der Flüssigkeitsspiegel in den ausgewählten Entnahmebehältern so eingestellt, daß ihr Boden einen Abstand von der Ebene der Ansaugspitzen der abgesenkten Pipetten aufweist, der kleiner ist als die Mindestfüllhöhe, während der Flüssigkeitsspiegel in den übrigen Entnahmebehältern so eingestellt wird, daß ihr Boden einen Abstand von der Ebene der Ansaugspitzen der abgesenkten Pipetten aufweist, der größer ist als die Höchstfüllhöhe.

Die Füllhöhe der Entnahmebehälter und damit die Höhe des Flüssigkeitsspiegels über dem vorgegebenen Niveau kann ebenfalls zur Steuerung des angesaugten Flüssigkeitsvolumens eingesetzt werden, indem man das Maß, um welches der höhere Flüssigkeitsspiegel in den ausgewählten Entnahmebehältern das vorgegebene Niveau übersteigt, vorzugsweise so wählt, daß der Flüssigkeitsspiegel während der Entnahme von Flüssigkeit nicht unter das vorgegebene Niveau sinkt.

Das Anheben der ausgewählten Entnahmebehälter bzw. das Absenken der übrigen Entnahmebehälter erfolgt zweckmäßig dort, wo als Entnahmebehälter handelsübliche Behälter, wie Probenröhrchen oder Reagenzgläser verwendet werden. Die Entnahmebehälter können dann zum Beispiel vertikal verschiebbar in unten offene Aufnahmeöffnungen einer Halterung eingesetzt werden, so daß sie nach einem Plazieren der Halterung auf einem Hubmechanismus in einer Entnahmestation der Vorrichtung mittels einer unterhalb jedes Behälters vorgesehenen steuerbaren Hubeinrichtung des Hubmechanismus angehoben bzw. abgesenkt werden können.

Gemäß einer weiteren bevorzugten Erfindungsvariante werden die Entnahmebehälter mit Hilfe von Schwimmkörpern angehoben, die zweckmäßig jeweils unterhalb der Entnahmebehälter in einem mit Flüssigkeit gefüllten oder befüllbaren Behälter angeordnet sind, so daß sich ihr Auftrieb in der Flüssigkeit zum Anheben der ausgewählten Entnahmebehälter nutzen läßt. Das Aufschwimmen der übrigen Entnahmebehälter wird dabei verhindert, indem diese vorzugsweise durch Magnetkräfte in einer Stellung festgehalten werden, in der ihr Flüssigkeitsspiegel unter dem vorgegebenen Niveau liegt.

Die Verwendung von handelsüblichen Reagenzgläsern oder Probenbehältern ist insbesondere dann von Vorteil, wenn die Flüssigkeiten bereits in derartigen Behältern angeliefert werden, wenn aus verschiedenen Entnahmebehältern unterschiedliche Flüssigkeiten entnommen werden sollen und/oder wenn ein Teil der Flüssigkeiten häufiger gegen andere Flüssigkeiten ausgetauscht werden muß, wozu die Entnahmebehälter vorzugsweise austauschbar in die Halterung eingesetzt sind.

Das Anheben des Flüssigkeitsspiegels in den ausgewählten Entnahmebehältern erfolgt zweckmäßig dort, wo die Entnahmebehälter gemäß einer anderen vorteilhaften Ausgestaltung der Erfindung von Ausnehmungen in einer Entnahmebehälterplatte gebildet werden. Diese Ausnehmungen werden vorzugsweise an ihrem unteren Ende durch einen Kolben, eine dehnbare Membran oder einen anderen Verschluss begrenzt, der nach oben in den unteren Teil des Behälters hinein bewegt werden kann, um zum Anheben des Flüssigkeitsspiegels Flüssigkeit aus dem unteren Teil des Behälters in einen darüberliegenden Teil zu verdrängen. Die Bewegung der Verschlüsse erfolgt auch in diesem Fall zweckmäßig mittels einer unterhalb jedes Behälters vorgesehenen steuerbaren Hubeinrichtung eines in einer Entnahmestation der Vorrichtung angeordneten Hubmechanismus, auf dem die Entnahmebehälterplatte austauschbar plaziert werden kann.

Immer dann, wenn aus sämtlichen Entnahmebehältern dieselbe Flüssigkeit entnommen werden soll, können gemäß einer anderen erfindungsgemäßen Lösungsvariante die ausgewählten Entnahmebehälter vor der Annäherung an die Pipetten selektiv mit einer Flüssigkeit geflutet werden, wobei das Eindringen von Flüssigkeit in die übrigen Entnahmebehälter verhindert oder in die übrigen Entnahmebehälter eingedrungene Flüssigkeit vor der Annäherung wieder aus den Entnahmebehältern verdrängt wird, indem zum Beispiel mindestens ein bewegliches Element aus einer ersten Stellung, in der es einen Boden von jedem der Entnahmebehälter bildet, in eine zweite Stellung bewegt wird, in der es eine obere Entnahmeöffnung von jedem der Entnahmebehälter verschließt.

Im folgenden wird die Erfindung anhand einiger in der Zeichnung dargestellter Ausführungsbeispiele der Erfindung näher erläutert. Es zeigen:
Fig. 1: eine Vorderseitenansicht einer erfindungsgemäßen Pipettiervorrichtung mit einer auf einem Pipettenträger zwischen einer Entnahmestation, einer Abgabestation und einer Reinigungsstation verfahrbaren Multikanalpipette;
die Figuren 2a bis 2e: schematische vertikale Schnittansichten der Entnahmestation und des darüber angeordneten Pipettenträgers bei verschiedenen Schritten eines erfindungsgemäßen Pipettierverfahrens, bei dem zur Einstellung unterschiedlicher Flüssigkeitsspiegel die ausgewählten Entnahmebehälter selektiv angehoben werden;
Fig. 3: eine schematische vertikale Schnittansicht entsprechend Fig. 2c zur Erläuterung eines anderen erfindungsgemäßen Pipettierverfahrens mit einer anderen Reihenfolge der Schritte;
die Figuren 4a und 4b: schematische vertikale Schnittansichten der Entnahmestation sowie des darüber angeordneten Pipettenträgers einer anderen erfindungsgemäßen Vorrichtung entsprechend Fig. 2a und 2b bei zwei Schritten eines anderen erfindungsgemäßen Pipettierverfahrens, bei dem zur Einstellung unterschiedlicher Flüssigkeitsspiegel die Flüssigkeitsspiegel in den ausgewählten Entnahmebehältern durch Verdrängung von Flüssigkeit selektiv angehoben werden;
die Figuren 5a bis 5c: schematische vertikale Schnittansichten der Entnahmestation einer gegenüber der Pipettiervorichtung aus den Figuren 4a und 4b noch etwas abgewandelten Pipettiervorrichtung sowie des darüber angeordneten Pipettenträgers bei drei unterschiedlichen Schritten zur Entnahme von Flüssigkeit;
die Figuren 6a bis 6e: schematische vertikale Schnittansichten einer noch anderen erfindungsgemäßen Pipettiervorrichtung mit einer Einrichtung zum Fluten der Entnahmebehälter in unterschiedlichen Stadien beim Fluten;
die Figuren 7a und 7b: schematische vertikale Schnittansichten der Entnahmestation einer gegenüber der Pipettiervorichtung aus den Figuren 6a und 6e etwas abgewandelten Pipettiervorrichtung sowie des darüber angeordneten Pipettenträgers bei zwei unterschiedlichen Schritten zur Entnahme von Flüssigkeit, entsprechend Fig. 6c und 6e;
die Figuren 8a und 8b: Ansichten entsprechend den Figuren 4a und 4b zur Erläuterung eines anderen erfindungsgemäßen Pipettierverfahrens, bei dem aus den ausgewählten Entnahmebehältern unterschiedliche Flüssigkeitsvolumina entnommen werden;
die Figuren 9a bis 9c: schematische vertikale Schnittansichten des unteren Teils der Entnahmestation einer noch anderen erfindungsgemäßen Pipettiervorrichtung bei drei unterschiedlichen Schritten zur Entnahme von Flüssigkeit;
die Figuren 10a bis 10c: weitere Varianten des in Fig. 9 dargestellten unteren Teils der Entnahmestation.

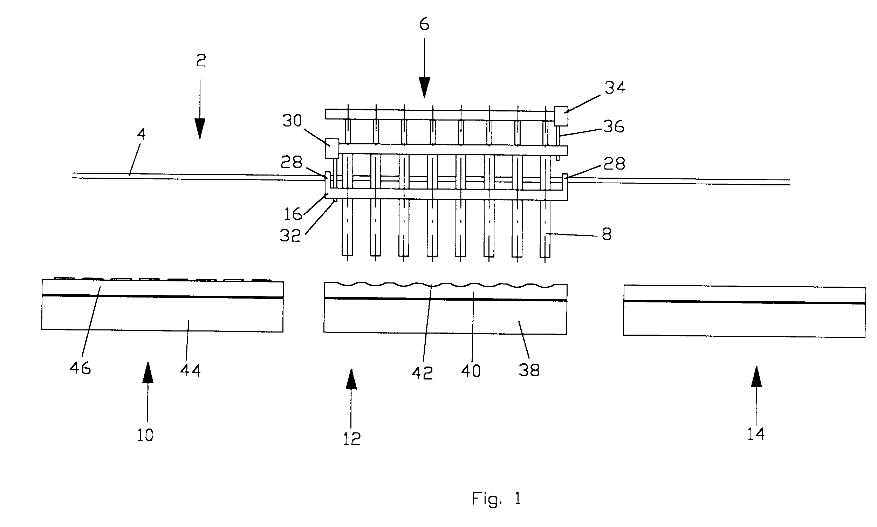

Die in Fig. 1 der Zeichnung dargestellte Pipettiervorrichtung 2 besteht im wesentlichen aus einer horizontalen Führungsschiene 4, an der ein Pipettenträger 6 mit einer aus 96 Kapillaren 8 bestehenden Multikanalpipette mit Hilfe eines nicht dargestellten Antriebs in horizontaler Richtung wahlweise bzw. nacheinander über eine Entnahmestation 10, eine Abgabestation 12 und eine Reinigungsstation 14 verfahrbar ist.

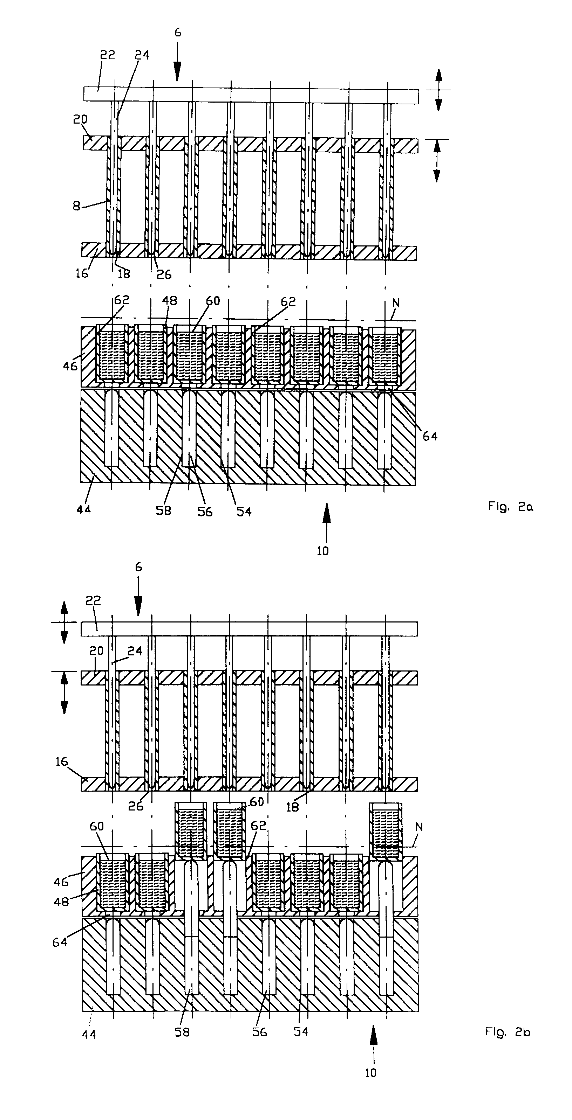

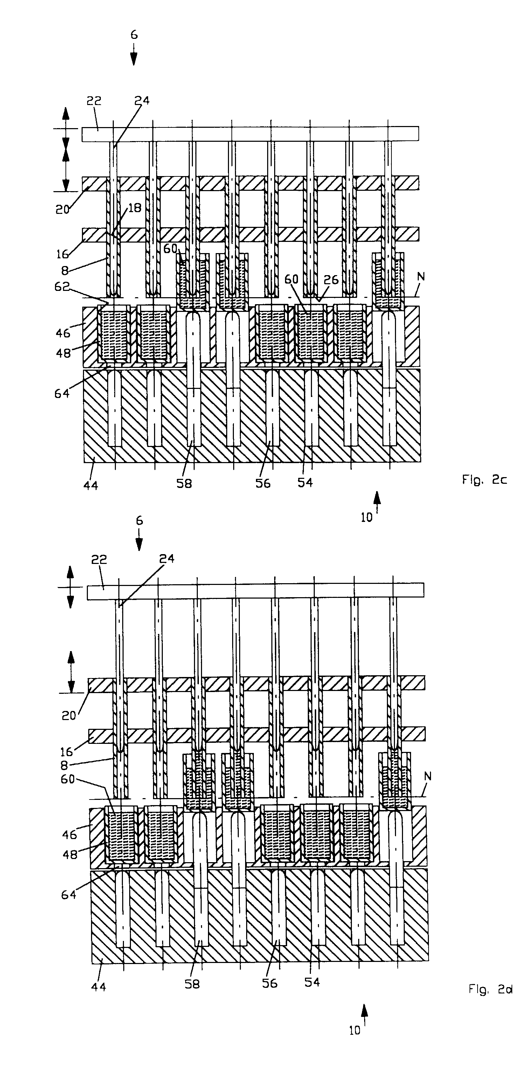

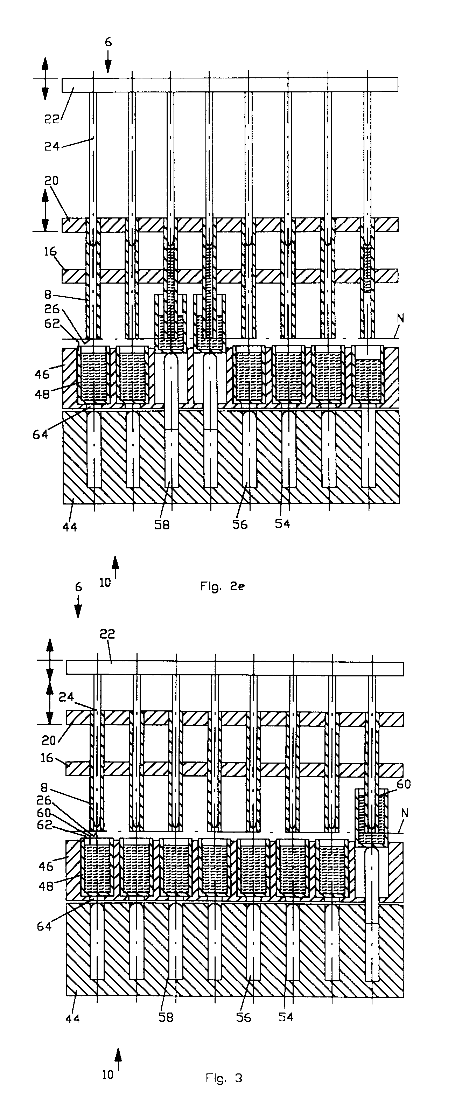

Der Pipettenträger 6 besteht im wesentlichen aus einer unteren horizontalen Führungsplatte 16 mit 96 Führungsbohrungen 18 (vgl. Fig. 2), in denen jeweils eine Kapillare 8 der Multikanalpipette vertikal verschiebbar geführt ist, einer mittleren Kapillarenträgerplatte 20, welche die 96 Kapillaren der Multikanalpipette trägt, sowie einer oberen Kolbenträgerplatte 22, welche 96 Kolben 24 trägt, von denen jeder in eine der 96 Kapillaren 8 der Multikanalpipette eingreift. Die Kapillaren 8 weisen sämtlich die gleiche Länge auf, wobei ihre oberen Enden zum Austausch beschädigter Kapillaren 8 jeweils lösbar in die Kapillarenträgerplatte 20 eingesetzt sind, und wobei sich ihre unteren, als Ansaugspitzen 26 dienenden Enden sämtlich in einer horizontalen Ebene befinden. Die Kapillaren 8 können über ihre gesamte Länge einen gleichförmigen Durchmesser aufweisen, wie in den Figuren dargestellt, oder können sich alternativ im Bereich ihrer Ansaugspitzen 26 nach unten zu verjüngen.

Die Führungsplatte 16 weist zwei Linearlager 28 auf, in denen sie auf der Führungsschiene 4 horizontal verschiebbar montiert ist.

Die Kapillarenträgerplatte 20 ist in Bezug zur Führungsplatte 16 in vertikaler Richtung in Führungen (nicht dargestellt) verschiebbar gelagert und trägt einen Stellmotor 30, dessen Stellspindel 32 eine Gewindemutter der Führungsplatte 16 durchsetzt, so daß die Kapillarenträgerplatte 20 in Bezug zur Führungsplatte 16 abgesenkt oder angehoben werden kann.

Die Kolben 24 der Kolbenträgerplatte 22 weisen zumindest an ihrem unteren Ende einen Außendurchmesser auf, der dem Innendurchmesser der Kapillaren 8 entspricht und liegen dichtend gegen die Innenwand der Kapillaren 8 an. Die Kolbenträgerplatte 22 ist in Bezug zur Kapillarenträgerplatte 20 in Führungen (nicht dargestellt) vertikal verschiebbar gelagert und trägt einen Stellmotor 34, dessen Stellspindel 36 eine Gewindemutter der Kapillarenträgerplatte 20 durchsetzt, so daß die Kolbenträgerplatte 22 in Bezug zur Kapillarenträgerplatte 20 abgesenkt oder angehoben werden kann. Dieses Anheben oder Absenken bewirkt eine Relativverschiebung der Kolben 24 in den Kapillaren 8, wodurch in denjenigen Kapillaren 8, deren Ansaugspitzen 26 gerade in Flüssigkeit eintauchen, diese Flüssigkeit angesaugt bzw. angesaugte Flüssigkeit wieder aus den Kapillaren 8 ausgestoßen wird. Demgegenüber wird in den übrigen Kapillaren Luft angesaugt bzw. wieder ausgestoßen. Wenn der Stellmotor 34 nicht angetrieben wird, wirkt er selbstsperrend, so daß bei einer Betätigung des Stellmotors 30 die Kolbenträgerplatte 22 zusammen mit der Kapillarenträgerplatte 20 angehoben oder abgesenkt wird.

Die Abgabestation 12 besteht im Wesentlichen aus einem Tisch 38, auf dem eine handelsübliche Mikrotiterplatte 40 mit 96 (oder 96 x 2²ⁿ (n=1,2,3...)) Reaktionsmulden 42 so aufgelegt und ggf. befestigt werden kann, daß sich die Reaktionsmulden 42 vertikal unter den Ansaugspitzen 26 der Kapillaren 8 befinden, nachdem der Pipettenträger 6 über den Tisch 38 verfahren worden ist. Das heißt, die Anzahl, die Anordnung und die Abstände der Kapillaren 8 der Multikanalpipette entsprechen denjenigen der Mikrotiterplatte 40.

Der Aufbau der Reinigungsstation 14 entspricht demjenigen bekannten Pipettenreinigungsstationen und wird daher nicht näher beschrieben.

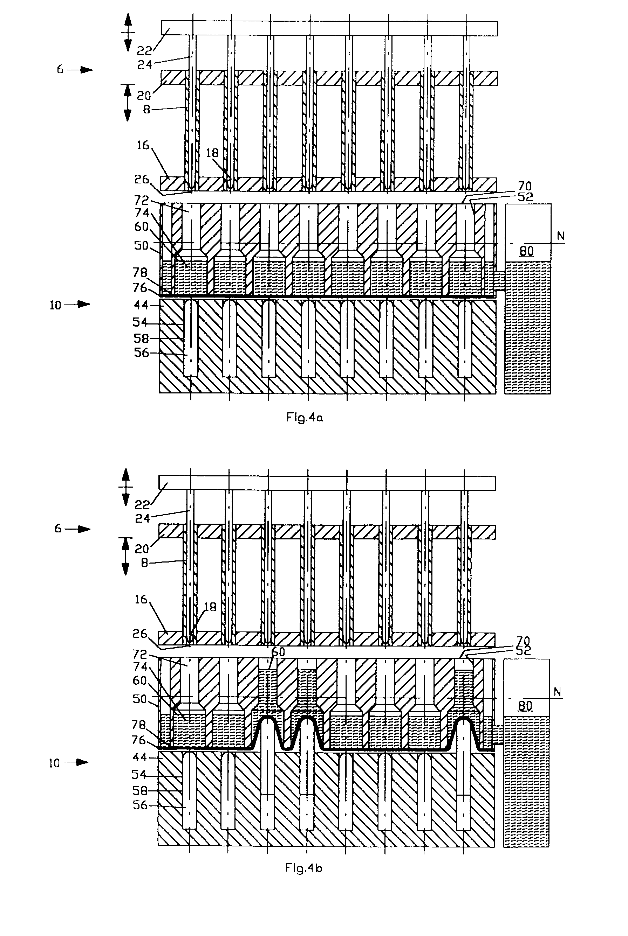

Die Entnahmestation 10 besteht im wesentlichen aus einem Trägersockel 44, auf dem wahlweise eine Halterung 46 für 96 herkömmliche Probenröhrchen 48, Reagenzgläser oder dergleichen (in den Figuren 1, 2a bis d und 3 schematisch dargestellt) mit identischen oder unterschiedlichen Flüssigkeiten oder alternativ eine Entnahmebehälterplatte 50 mit 96 Ausnehmungen 52 (Figuren 4 bis 7) für identische oder unterschiedliche Flüssigkeiten abgesetzt werden kann. Die Anordnung und die Abstände der Probenröhrchen 48 bzw. der Ausnehmungen 52, die hier beide als Entnahmebehälter bezeichnet werden, entsprechen denjenigen der Kapillaren 8 der Multikanalpipette und denjenigen der Reaktionsmulden 42 der Mikrotiterplatte 40, so daß der Pipettenträger 6 über die Entnahmestation 10 verfahren werden kann, um Flüssigkeit oder Flüssigkeiten aus sämtlichen oder ausgewählten Entnahmebehältern 48, 52 zu entnehmen und diese Flüssigkeit oder Flüssigkeiten nach einem Verfahren über die Abgabestation 12 in sämtliche oder ausgewählte Reaktionsmulden 42 der Mikrotiterplatte 40 abzugeben, wobei jeweils die Positionen der ausgewählten Reaktionsmulden 42 im Array der 96 Reaktionsmulden 42 mit denjenigen der ausgewählten Entnahmebehälter im Array der 96 Entnahmebehälter 48, 52 in der Entnahmestation 10 übereinstimmen.

Um eine selektive Entnahme von Flüssigkeit oder Flüssigkeiten aus einem zuvor ausgewählten Teil der Probenröhrchen 48 zu ermöglichen, befindet sich bei der in den Figuren 2a bis d und 3 dargestellten Entnahmestation 10 innerhalb des Trägersockels 44 ein Hubmechanismus mit 96 doppeltwirkenden Zylinder-/Kolbeneinheiten 54 (nur 8 dargestellt), die jeweils unterhalb der in die Halterung 46 eingesetzten Probenröhrchen 48 angeordnet sind und deren Kolben 56 jeweils einzeln durch gesteuerte Zufuhr von Druckluft oder Hydraulikflüssigkeit in eine der beiden Kammern des zugehörigen Zylinders 58 angehoben bzw. wieder abgesenkt werden können, um den ausgewählten Teil der Probenröhrchen 48 anzuheben, bis sich der Flüssigkeitsspiegel 60 in diesen Probenröhrchen 48 oberhalb eines vorgebenen Niveaus N befindet, während er in den übrigen Probenröhrchen 48 unterhalb dieses Niveaus N bleibt. Um das Anheben der Reagenzgläser 48 oder Probenröhrchen zu ermöglichen, weist die Halterung 46 nach oben offene zylindrische Aufnahmebohrungen 62 auf, in welche die Reagenzgläser 48 oder Probenröhrchen vertikal verschiebbar eingesetzt sind. Außerdem weist der Boden jeder Aufnahmebohrung 62 eine Durchtrittsöffnung 64 auf, durch die sich der Kolben 56 der darunter angeordneten Zylinder-/Kolbeneinheit 54 nach oben in die Aufnahmebohrung 62 bewegen kann, um das Probenröhrchen 48 darin anzuheben.

Bei dem in den Figuren 2a bis 2d dargestellten Pipettierverfahren werden zur Entnahme von Flüssigkeit aus den ausgewählten Probenröhrchen 48 zuerst diese Probenröhrchen 48 aus der in Fig. 2a dargestellten Ausgangsstellung durch Betätigung der zugehörigen Zylinder-/Kolbeneinheiten 54 angehoben, wie in Fig. 2b dargestellt, und dann die Kapillarenträgerplatte 20 mittels des Stellmotors 30 in Bezug zur Führungsplatte 16 abgesenkt, bis sich die Ansaugspitzen 26 der Kapillaren 8 auf dem vorgegebenen Niveau N befinden, auf dem sie in die Flüssigkeit in den ausgewählten Probenröhrchen 48 eintauchen, wie in Fig. 2c dargestellt, und der Stellmotor 30 durch einen nicht dargestellten Näherungsschalter abgeschaltet wird.

Anschließend wird die Kolbenträgerplatte 22 mittels des Stellmotors 34 in Bezug zur Kapillarenträgerplatte 20 angehoben und aus den ausgewählten Probenröhrchen 48 eine durch einen einstellbaren Hubweg vorgegebene Flüssigkeitsmenge angesaugt (Fig. 2d), bevor die ausgewählten Probenröhrchen 48 wieder abgesenkt und der Pipettenträger 6 mit den gefüllten Kapillaren 8 zur Abgabestation 12 verfahren wird, um die angesaugte Flüssigkeit durch Absenken der Kolbenträgerplatte 22 in Bezug zur Kapillarenträgerplatte 20 in die Reaktionsmulden 42 der Mikrotiterplatte 40 abzugeben. Ggf. kann zuvor die Kapillarenträgerplatte 20 in Bezug zur Führungsplatte etwas abgesenkt werden, bis die Ansaugspitzen 26 in die Mulden 42 eintauchen.

Zum Ansaugen von unterschiedlichen Flüssigkeitsmengen in die ausgewählten Kapillaren 8 kann der unter Bezugnahme auf Fig. 2a bis 2d beschriebene Entnahmevorgang vor dem Abgeben der Flüssigkeit wiederholt werden, wobei jedoch nur ein Teil der ausgewählten Probenröhrchen angehoben wird (statt drei in Fig. 2b nur zwei in Fig. 2e), und aus den angehobenen Probenröhrchen 48 ein zusätzliches Flüssigkeitsvolumen entnommen wird. Noch einfacher ist es, die Ansaugspitzen 26 der Kapillaren 8 auf dem Niveau N zu belassen und jeweils diejenigen Probenröhrchen 48 abzusenken, aus denen keine weitere Flüssigkeit mehr entnommen werden soll (Fig. 2e).

Fig. 3 veranschaulicht ein etwas abgewandeltes Verfahren, bei dem zuerst die Kapillaren 8 abgesenkt werden, bis sich ihre Ansaugspitzen 26 auf dem vorgegebenen Niveau N befinden, bevor anschließend die ausgewählten Probenröhrchen 48 angehoben werden, bis der Flüssigkeitsspiegel 60 darin über dem vorgegebenen Niveau N liegt.

Die Figuren 4a und 4b veranschaulichen die Entnahmestation 10 mit einer an Stelle der Halterung 46 auf den Trägersockel 44 aufgesetzten Entnahmebehälterplatte 50, deren Ausnehmungen 52 einen an eine Entnahmeöffnung 70 auf der Oberseite angrenzenden oberen Halsteil 72 mit einem kleineren Querschnitt und einen an die Unterseite der Platte 50 angrenzenden unteren Bauchteil 74 mit einem größeren Querschnitt aufweisen. Der Bauchteil 74 ist nach unten zu durch eine Membran 76 verschlossen, die vom Kolben 56 der darunter angeordneten Zylinder-/Kolbeneinheit 54 glockenförmig nach oben in den Bauchteil 74 hinein verlagert werden kann, um aus diesem Flüssigkeit nach oben in den Halsteil 72 zu verdrängen, wodurch der Flüssigkeitsspiegel 60 dort ansteigt (vgl. Fig. 4b). Die Membran 76 besteht aus einem dehnbaren elastischen Material, so daß sie vom Kolben 56 leicht verformt werden kann und sich von selbst in ihre ebene Ausgangsstellung zurückbewegt, wenn der Kolben 56 wieder abgesenkt wird. Die Membran 76 erstreckt sich über die gesamte Unterseite der Platte 50 und liegt lose gegen ringförmige, die unteren Ränder der Ausnehmungen 52 umgebende Vorsprünge 78 auf der Unterseite der Entnahmebehälterplatte 50 an, so daß die Ausnehmungen 52 durch Abheben der Platte 50 von der Membran 76 aus einem seitlich angebrachten Flüssigkeitsbehälter 80 mit Flüssigkeit geflutet und anschließend durch Anpressen von oben gegen die Membran 76 in Bezug zueinander wieder abgedichtet werden können. Diese Ausgestaltung der Entnahmebehälterplatte 50 wird bevorzugt zur Entnahme identischer Flüssigkeiten gewählt, während zur Entnahme unterschiedlicher Flüssigkeiten vorzugsweise eine Entnahmebehälterplatte 50 mit einer Membran verwendet wird, die um die Ausnehmungen 52 herum an der Unterseite der Platte 50 befestigt ist.

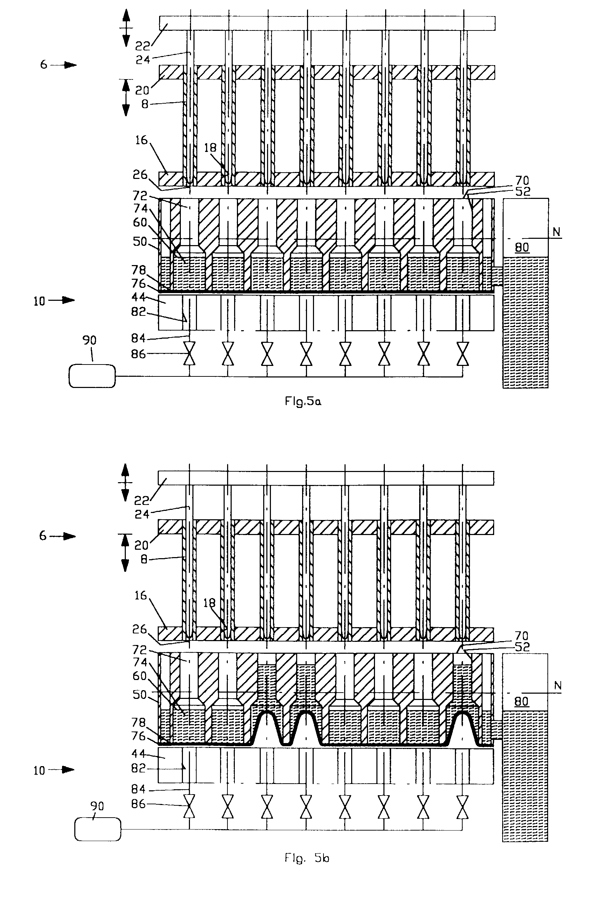

Im Unterschied zu der zuvor beschriebenen Entnahmestation 10 ist die Entnahmestation 10 der Figuren 5a bis 5c, 6a bis 6e und 7a und 7b nur zur Verwendung in Verbindung mit Entnahmebehälterplatten 50 mit unten offenen Ausnehmungen 52 vorgesehen. Die Entnahmestation 10 weist hier im Inneren des Trägersockels 44 an Stelle der Zylinder-/Kolbeneinheiten 54 96 vertikale Bohrungen 82 auf, die jeweils unterhalb der Ausnehmungen 52 der Entnahmebehälterplatte 50 angeordnet sind. Die Bohrungen 82 sind über schematisch dargestellte Leitungen 84 und steuerbare Ventile 86 mit einer Unterdruckquelle 88 und/oder einer Druckluftquelle 90 verbindbar, so daß sie einzeln gesteuert mit einem Unterdruck oder mit Druckluft beaufschlagt werden können.

Die Figuren 5a bis c zeigen die Entnahmestation 10 mit einer Entnahmebehälterplatte 50 wie in Fig. 4a und b, wobei die Bohrungen 82 mit der Druckluftquelle 90 verbunden sind, so daß die Membran 76 durch selektiv gesteuertes Beaufschlagen einzelner Bohrungen 82 mit Druckluft angehoben werden kann, um Flüssigkeit aus dem Bauchteil der über diesen Bohrungen 82 angeordneten Ausnehmungen 52 zu verdrängen.

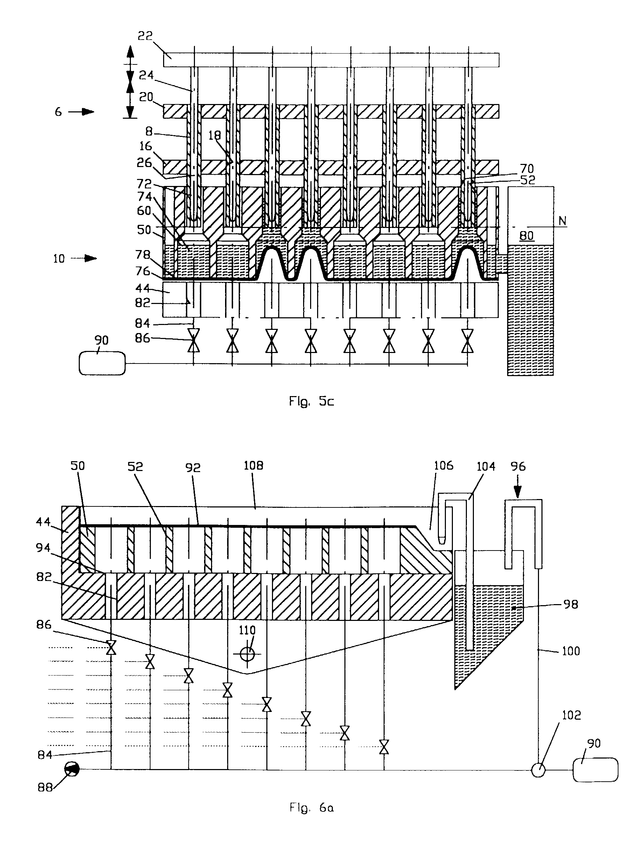

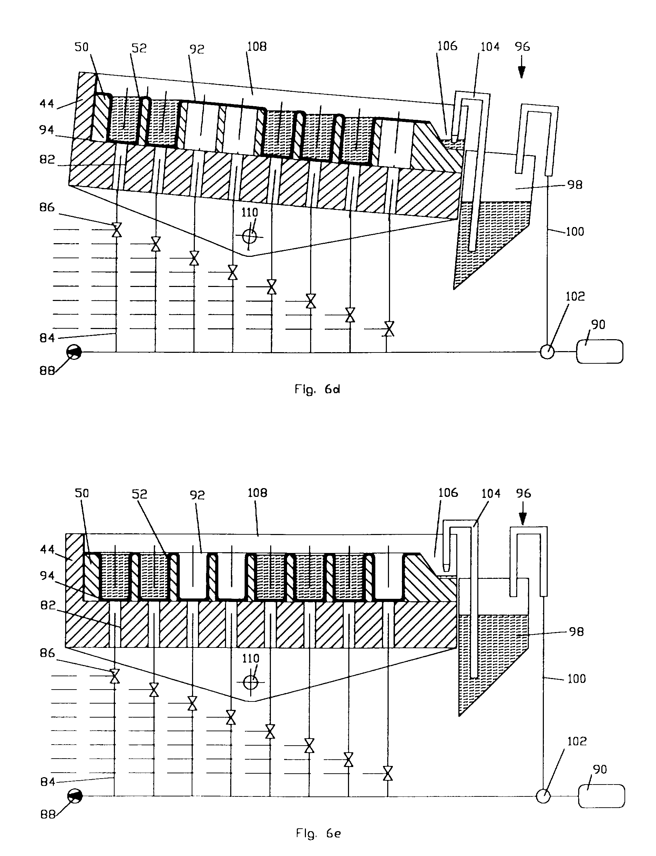

Bei der in den Figuren 6a bis e dargestellten Entnahmebehälterplatte 50 sind die Ausnehmungen 52 an ihrem oberen Ende durch eine elastisch dehnbare Membran 92 verschlossen, die sich über die gesamte Oberseite der Platte 50 erstreckt, während die unteren Enden der Ausnehmungen 52 mit den darunter angeordneten Bohrungen 82 kommunizieren. Zwischen der Unterseite der Platte 50 und der Oberseite des Trägersockels 44 ist eine Dichtung 94 angeordnet, die jeweils unterhalb der Ausnehmungen 52 Durchlaßöffnungen aufweist, so daß die Ausnehmungen 52 in der Trennfuge zwischen der Platte 50 und dem Sockel 44 luftdicht von den benachbarten Ausnehmungen 52 getrennt sind.

Durch Anlegen eines Unterdrucks an einer beliebigen Bohrung 82 wird die Membran 92 von oben her in die über dieser Bohrung 82 angeordnete Ausnehmung 52 gesaugt und kehrt beim Belüften der Bohrung 82 infolge ihrer elastische Rückstellung wieder in die in Fig. 6a dargestellte entspannte Ausgangsstellung zurück.

Diese Art von Entnahmebehälterplatten 50 findet ebenfalls besonders dann Verwendung, wenn aus sämtlichen Ausnehmungen 52 dieselbe Flüssigkeit entnommen werden soll. Die Entnahmestation 10 der Figuren 6a bis e weist in diesem Fall zusätzlich eine Flutungseinrichtung 96 auf, die es gestattet, sämtliche oder einen Teil der Ausnehmungen 52 mit der Flüssigkeit zu fluten. Die Flutungseinrichtung 96 besteht im wesentlichen aus einem neben der Entnahmebehälterplatte 50 am Trägersockel 44 angebrachten Flüssigkeitsbehälter 98, dessen oberes Ende über eine oberhalb der Flüssigkeit im Behälter 98 mündende Druckleitung 100 und ein Dreiwegeventil 102 wahlweise mit einer Unterdruckquelle oder einer Druckluftquelle verbindbar ist, beispielsweise den Quellen 88 bzw. 90, aus denen die Bohrungen 82 im Trägersockel 44 mit einem Unterdruck bzw. mit Druckluft beaufschlagt werden. Im Flüssigkeitsbehälter 98 befindet sich ein Steigrohr 104, dessen unteres Ende in die Flüssigkeit eintaucht und dessen oberes Ende in einer in der Nähe eines hochgezogenen Umfangsrandes 108 der Entnahmebehälterplatte 50 in deren Oberseite angeordneten Vertiefung 106 mündet. Der Trägersockel 44 ist hier zusammen mit der Entnahmebehälterplatte 50 auf einer horizontalen Achse 110 schwenkbar gelagert, so daß sich die Entnahmebehälterplatte 50 leicht kippen läßt.

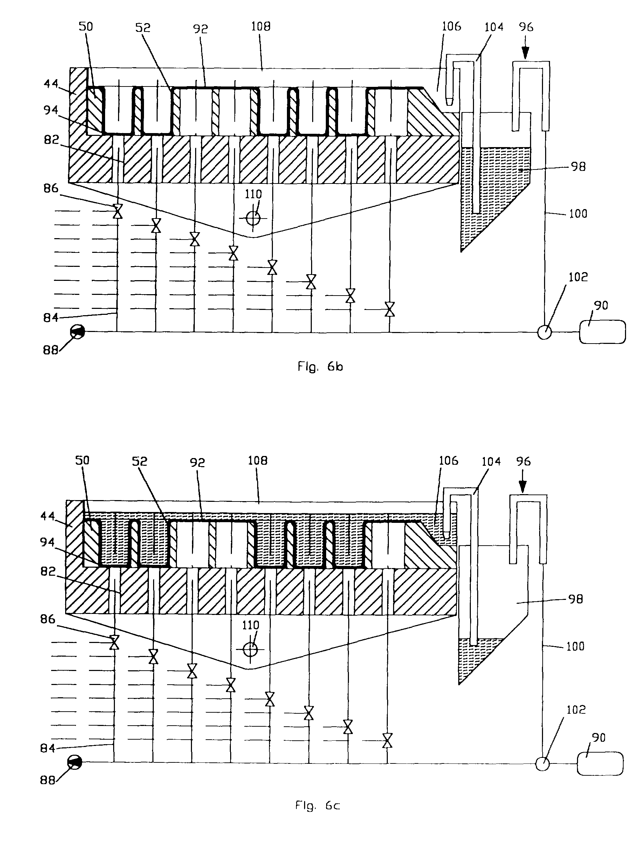

Zum Befüllen einzelner ausgewählter Ausnehmungen 52 in der Entnahmebehälterplatte 50 mit Flüssigkeit werden zuerst die unter diesen Ausnehmungen 52 angeordneten Bohrungen 82 mit Unterdruck beaufschlagt, um die Membran 92 in diese Ausnehmungen 52 zu ziehen, wie in Fig. 6b dargestellt. Anschließend wird über das Dreiwegeventil 102 und die Druckleitung 100 Druckluft oben in den Flüssigkeitsbehälter 98 zugeführt, um die Entnahmebehälterplatte 50 und die ausgewählten Ausnehmungen 52 durch das Steigrohr 104 mit Flüssigkeit zu fluten, wie in Fig. 6c dargestellt, während die übrigen Ausnehmungen 52 am oberen Ende durch die Membran 92 verschlossen bleiben.

Anschließend wird der Trägersockel 44 mit der Platte 50 leicht um die Achse 110 gekippt, wie in Fig. 6d dargestellt, und gleichzeitig die Druckleitung 100 durch Umschalten des Dreiwegeventils 102 mit Unterdruck beaufschlagt, so daß die überschüssige Flüssigkeit auf der Oberseite der Platte 50 in Richtung der Vertiefung 106 fließt und von dort durch das Steigrohr 104 in den Behälter 98 zurückgesaugt wird.

Nach dem Absaugen der Flüssigkeit wird die Entnahmebehälterplatte 50 in die horizontale Stellung zurückgekippt und die Bohrungen 82 unter den übrigen Ausnehmungen 52 ebenfalls mit Unterdruck beaufschlagt, wie in Fig. 6e dargestellt, bevor der Pipettenträger 6 über die Entnahmestation 10 verfahren und die Kapillarenträgerplatte 20 soweit abgesenkt wird, bis sich die Ansaugspitzen 26 der Kapillaren auf einem vorgegebenen Niveau N unterhalb des Flüssigkeitsspiegels 60 in den ausgewählten Ausnehmungen 52 befinden.

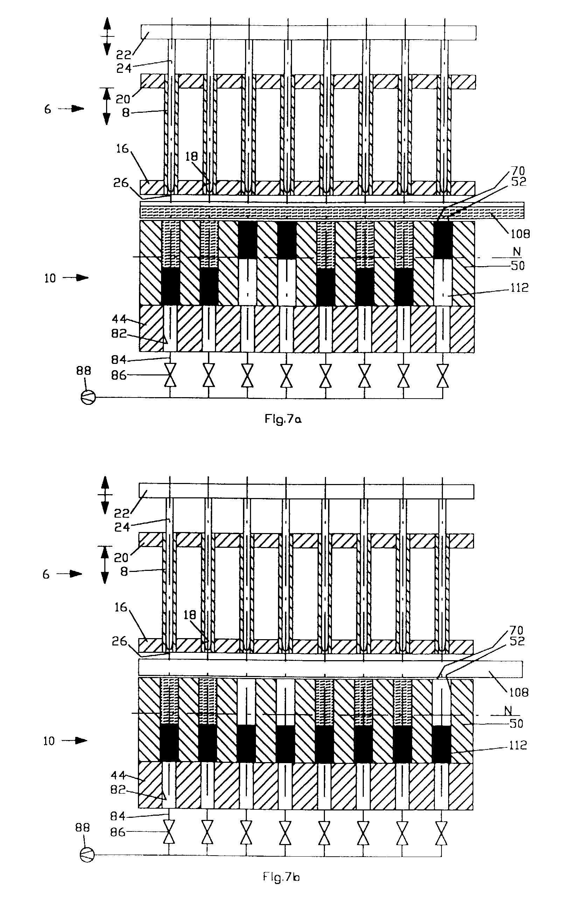

Bei der in Fig. 7a und 7b dargestellten Entnahmebehälterplatte 50 sind an Stelle der Membran 92 Kolbenelemente 112 in die zylindrischen Ausnehmungen 52 eingesetzt, die durch Anlegen eines Unter- bzw. Überdrucks an den unter den Ausnehmungen 52 angeordneten Bohrungen 82 nach unten gesaugt bzw. nach oben gedrückt werden können, so daß sie entweder den Boden der ausgewählten Ausnehmungen 52 bilden oder die übrigen Ausnehmungen 52 verschließen, um das Eindringen von Flüssigkeit in diese zu verhindern.

Das selektive Anheben ausgewählter Probenröhrchen 48, das selektive Anheben des Flüssigkeitsspiegels 60 in den Ausnehmungen 52 oder das selektive Fluten der Ausnehmungen 52 erfolgt vorzugsweise auf der Grundlage von Positionsdaten ausgewählter Reaktionsmulden 42 der Mikrotiterplatte 40, in die jeweils eine Flüssigkeit aus einem der Probenröhrchen 48 bzw. aus einer der Ausnehmungen 52 mit entsprechenden Positionsdaten innerhalb des jeweiligen Arrays von 12 x 8 pipettiert werden soll. Die Positionsdaten dieser ausgewählten Reaktionsmulden 42 werden einem Computer (nicht dargestellt) eingegeben, der dann die Zylinder-/Kolbeneinheiten 54 bzw. die Ventile 86 in der Entnahmestation 10 entsprechend ansteuert.

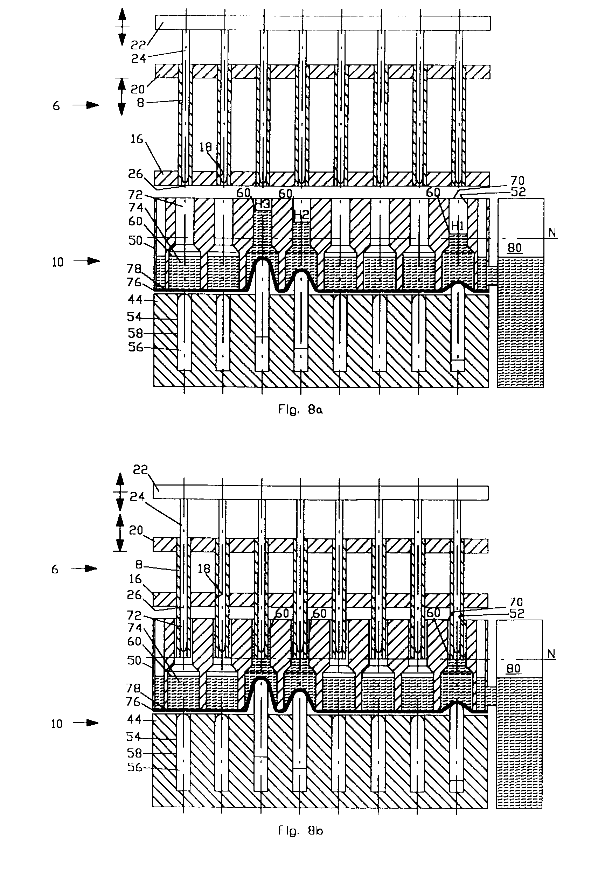

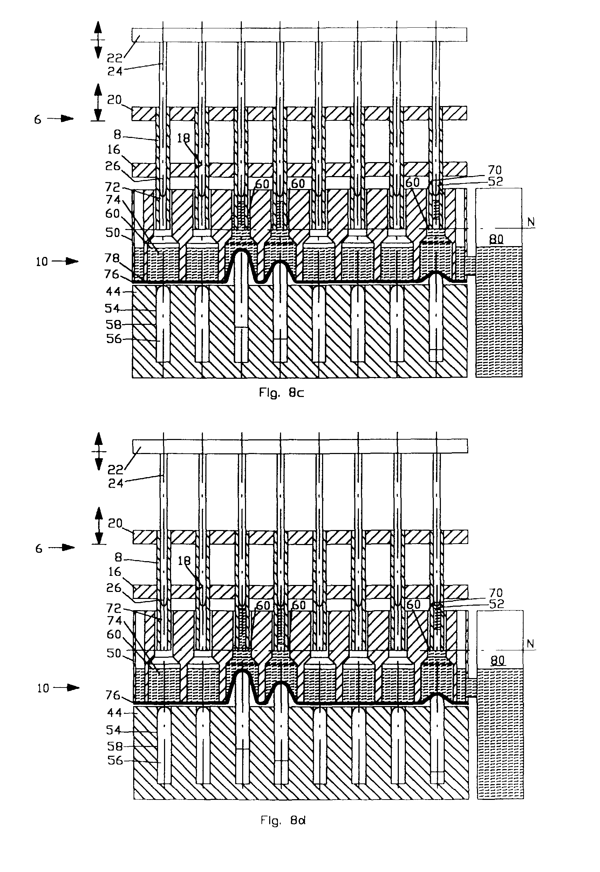

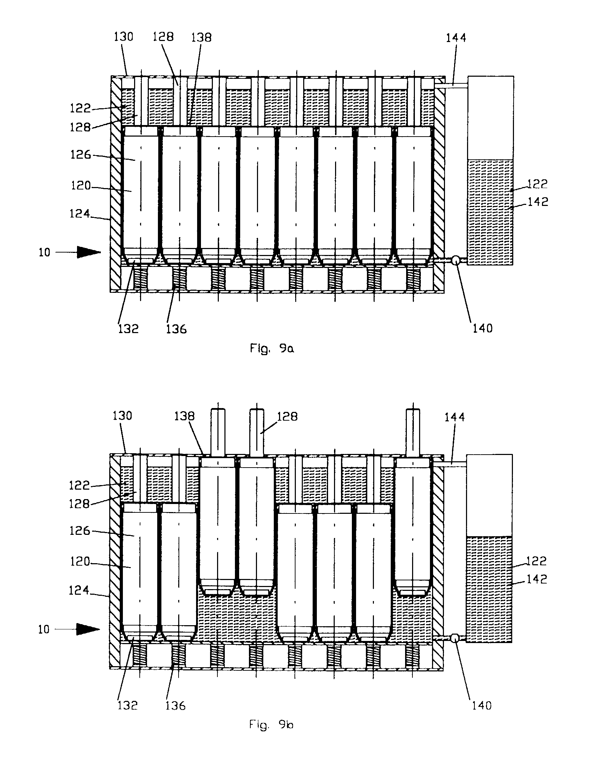

In den Figuren 8a bis 8d sind am Beispiel der Pipettiervorrichtung aus den Figuren 4a und 4b zwei Schritte eines anderen Pipettierverfahrens zur Entnahme unterschiedlicher Flüssigkeitsvolumina dargestellt. Im Unterschied zu dem Ausführungsbeispiel der Figuren 4a und 4b werden dort nach dem Fluten der Ausnehmungen 52 und dem Andrücken der Entnahmebehälterplatte 50 gegen die Oberseite des Trägersockels die Kolben 56 der drei ausgewählten Ausnehmungen 52 unterschiedlich weit angehoben (Fig. 8a) und damit unterschiedliche Flüssigkeitsvolumina aus dem Bauchteil 74 in den Halsteil 76 der Ausnehmungen 52 verdrängt, so daß vor und nach dem Absenken der Kapillaren 8 in den ausgewählten Ausnehmungen 52 die Höhe H1, H2, H3 der Flüssigkeitsspiegel 60 über dem vorgegebenen Niveau N unterschiedlich groß ist (Fig. 8a und 8b). Dadurch wird bei einer entsprechenden Wahl der Querschnitte der Halsteile 76 der Ausnehmungen 52 einerseits und der Kapillaren 8 andererseits während des Anhebens der Kolbenträgerplatte 22 (Fig. 8c und 8d) nacheinander, d.h. nach unterschiedlichen Zeitintervallen, Luft in die Kapillaren 8 über den ausgewählten Ausnehmungen 52 angesaugt, und zwar immer dann, wenn der Flüssigkeitsspiegel 60 in der jeweiligen Ausnehmung 52 unter das vorgegebene Niveau N absinkt. Nach dem Ansaugen enthalten daher die ausgewählten Kapillaren 8 unterschiedliche Flüssigkeitsvolumina. Das schrittweise Anheben der Kolben 24 erfolgt ebenso wie das Absenken bei dem Verfahren aus Fig. 2e mit einer programmierbaren Steuerung.

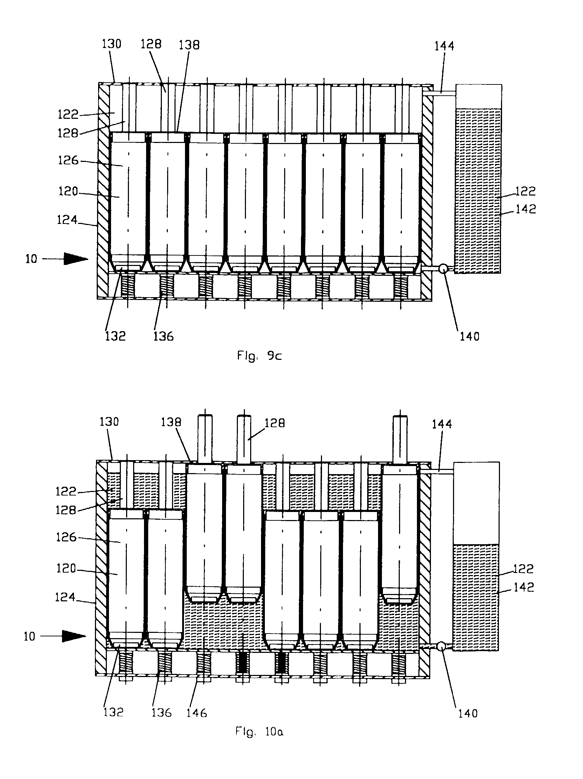

Die Figuren 9a bis 9c zeigen schematisch vertikale Schnittansichten eines unteren Teils einer noch anderen Entnahmestation 10 mit einem Hubmechanismus, bei dem die ausgewählten Probenröhrchen oder Reagenzgläser (nicht dargestellt) durch den Auftrieb von Schwimmkörpern 120 in einer Flüssigkeit 122 angehoben werden, während die übrigen Probenröhrchen oder Reagenzgläser durch Magnetkräfte festgehalten werden. Die Probenröhrchen oder Reagenzgläser sind ähnlich wie die Probenröhrchen 48 in Fig. 2 vertikal verschiebbar in Halterungen 48 eingesetzt, die austauschbar auf den in Fig. 9 dargestellten unteren Teil der Entnahmestation 10 aufgesetzt werden können.

Dieser untere Teil besteht im wesentlichen aus einem mit der Flüssigkeit 122 befüllbaren rechteckigen Behälter 124, in dem die Schwimmkörper 120 der Anordnung der Probenröhrchen entsprechend jeweils unterhalb von diesen angeordnet sind. Die Schwimmkörper 120 bestehen im wesentlichen aus einem mit Luft gefüllten aufrechten langgestreckten zylindrischen Hohlkörper 126, einem nach oben überstehenden dünneren zylindrischen Hals 128, dessen oberes Ende durch eine Lochplatte 130 hindurch gegen die Unterseite des darüber befindlichen, vertikal verschiebbar gehaltenen Probenröhrchens (nicht dargestellt) stößt, sowie einem am Boden jedes Schwimmkörpers 120 angebrachten ferromagnetischen Körper 132. Die ferromagnetischen Körper 132 wirken jeweils mit darunter im doppelten Boden des Behälters 124 angebrachten Elektromagnetspulen 136 zusammen, die einzeln mit Strom beaufschlagbar sind, um zwischen ihrem vertikalen Weicheisenkern und dem ferromagnetischen Körper 132 elektromagnetische Anziehungskräfte zu erzeugen. Diese Kräfte werden durch die an den Spulen 136 angelegte Spannung so eingestellt, daß die Summe der Anziehungskräfte und der Gewichtskräfte der Schwimmkörper 120 und der von ihnen getragenen Probenröhrchen größer ist als die Auftriebskräfte der Schwimmkörper 120, so daß in der in Fig. 9a dargestellten Ausgangsstellung sämtliche Schwimmkörper 120 in die Flüssigkeit 122 eingetaucht am Boden des Behälters 124 festgehalten werden.

Zur Präsentation der ausgewählten Probenröhrchen kann die Stromzufuhr zu den entsprechenden Spulen 136 auf der Grundlage von deren Positionsdaten rechnergesteuert abgeschaltet werden. Dadurch überwiegen dort die Auftriebskräfte, und die über den abgeschalteten Spulen 136 angeordneten Schwimmkörper 120 schwimmen in der Flüssigkeit 122 auf, bis eine zwischen dem Hohlkörper 126 und dem Hals 128 angeordnete Ringschulter 138 von unten gegen die Lochplatte 130 stößt. In dieser in Fig. 9b dargestellten Stellung befindet sich der Flüssigkeitsspiegel in den ausgewählten Probenröhrchen oberhalb des vorgegebenen Niveaus N, während er in den übrigen Probenröhrchen darunter liegt.

Die Lochplatte 130 bildet einen Anschlag für die Schwimmkörper 120 und gewährleistet, daß diese unabhängig vom Gewicht der Flüssigkeit in den Probenröhrchen stets bis zur gleichen Höhe angehoben werden. Alternativ könnte die Lochplatte 130 jedoch auch weggelassen werden, so daß die Schwimmkörper 120 bis zum Erreichen eines Gleichgewichts zwischen Auftriebs- und Gewichtskräften aufschwimmen. Da stärker gefüllte Probenröhrchen wegen ihres schwereren Inhalts nicht so weit aufschwimmen, wie weniger stark gefüllte Probenröhrchen, lassen sich auf diese Weise unterschiedliche Füllstände in den Probenröhrchen mindestens teilweise ausgleichen, so daß die Kapillaren 8 im wesentlichen gleich weit in die Flüssigkeit in den Probenröhrchen eintauchen.

Nach der Entnahme von Proben aus den angehobenen Probenröhrchen werden diese wieder in die Ausgangsstellung abgesenkt, indem die Flüssigkeit 122 aus dem Behälter 124 mittels einer Pumpe 140 soweit in einen Speicherbehälter 142 abgepumpt wird, daß die zuvor angehobenen Schwimmkörper 120 wieder bis zum Boden des Behälters 124 absinken, wie in Fig. 9c dargestellt. Anschließend werden sämtliche Spulen 136 wieder mit Strom beaufschlagt, so daß die Entnahmestation 10 für die nächste selektive Präsentation bereit ist. Ein Überlauf 144 zwischen dem Flüssigkeitsbehälter 124 und dem Speicherbehälter 142 garantiert dabei im Behälter 124 stets gleichbleibende Flüssigkeitspegel und damit Auftriebskräfte.

Alternativ können die Schwimmkörper 120 in dem mit Flüssigkeit 122 gefüllten Behälter 124 mechanisch mit Hilfe einer vertikal beweglich unterhalb der Lochplatte 130 angeordneten zweiten Lochplatte (nicht dargestellt) mit entsprechendem Lochmuster in der Flüssigkeit 122 nach unten gedrückt werden, bis das untere Ende der zuvor angehobenen Schwimmkörper 120 wieder den Boden des Behälters 124 berührt.

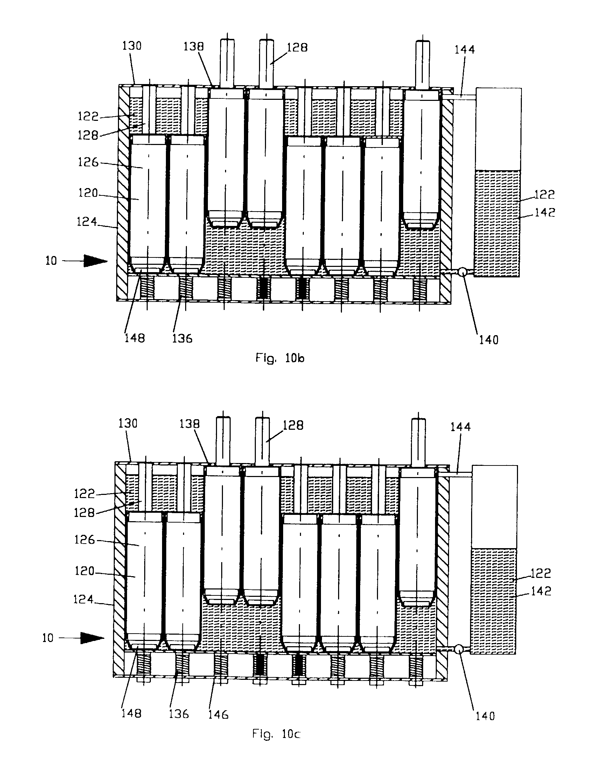

Um die durch eine anhaltende Stromzufuhr zu den Spulen 136 verursachte Erwärmung der Entnahmestation 10 zu verringern, ist bei dem in Fig. 10a dargestellten Ausführungsbeispiel unterhalb von jeder Spule 136 ein Permanentmagnet 146 angebracht, der die magnetischen Anziehungskräfte der Spulen 136 verstärkt und eine Verringerung der Stromstärke des zugeführten Haltestroms der Spulen 136 ermöglicht.

Zu dem gleichen Zweck ist bei dem in Fig. 10b dargestellten Ausführungsbeispiel an Stelle des ferromagnetischen Körpers 132 ein Permanentmagnet 148 am unteren Ende jedes Schwimmkörpers 120 angebracht. Hier halten die magnetischen Anziehungskräfte zwischen den Permanentmagneten 148 und den Weicheisenkernen der Spulen 136 die Schwimmkörper 120 am Boden des Behälters 124 fest, bis die Spulen 136 unterhalb der ausgewählten Probenröhrchen derart erregt werden, daß die Polung ihres Magnetfeldes entgegengesetzt zu derjenigen der Permanentmagnete 148 ist und diese damit abgestoßen werden. Gleichzeitig können die Spulen 136 unter den übrigen Probenröhrchen mit gleicher Polung wie die Permanentmagnete 148 erregt werden, um dort die Anziehungskräfte zu verstärken und die Sicherheit gegen ein Aufschwimmen zu vergrößern.

Bei dem in Fig. 10c dargestellten Ausführungsbeispiel sind sowohl am unteren Ende jedes Schwimmkörpers 120 als auch unterhalb jeder Spule 136 Permanentmagnete 148 bzw. 146 angeordnet, deren Polung so gewählt ist, daß sie sich durch den Weicheisenkern der nicht erregten Spule 136 hindurch gegenseitig anziehen und ein Aufschwimmen der Schwimmkörper 120 verhindern. Zur Präsentation von ausgewählten Probenröhrchen werden die unterhalb von diesen angeordneten Spulen 136 so mit Strom beaufschlagt, daß ein zu den Magnetfeldern der Magnete 146, 148 entgegengesetzt gepoltes Magnetfeld erzeugt wird. Dieses Magnetfeld wirkt den Anziehungskräften zwischen den Magneten 146, 148 entgegen und schwächt diese so stark ab, daß die Auftriebskräfte für ein Aufschwimmen der Schwimmkörper 120 sorgen.

## Patentansprüche

1. Pipettierverfahren zum selektiven Entnehmen von Flüssigkeit aus beliebigen Entnahmebehältern in einer Vielzahl von nebeneinander angeordneten Entnahmebehältern, bei dem ein beweglicher Pipettenträger mit einer Mehrzahl von nebeneinander angeordneten Pipetten, deren Ansaugspitzen sämtlich in einer Ebene liegen, über die Entnahmebehälter bewegt wird, und bei dem zum gleichzeitigen Ansaugen von Flüssigkeit aus frei auswählbaren Entnahmebehältern die Flüssigkeitsspiegel der ausgewählten Entnahmebehälter einerseits und die sämtlich in einer Ebene angeordneten Ansaugspitzen der über die Entnahmebehälter bewegten Pipetten andererseits mindestens bis zum Kontakt der Flüssigkeitsspiegel und der Ansaugspitzen gesteuert aneinander angenähert werden, dadurch gekennzeichnet, daß bei den ausgewählten Entnahmebehältern (48, 52) einerseits und bei den übrigen Entnahmebehältern (48, 52) andererseits unterschiedliche Flüssigkeitsspiegel (60) eingestellt werden, die über bzw. unter einem vorgegebenen Niveau (N) liegen, und daß die über die Entnahmebehälter (48, 52) bewegten Pipetten (8) mit ihren Ansaugspitzen (26) gemeinsam auf das vorgegebene Niveau (N) abgesenkt werden, um sie mit der Flüssigkeit in den ausgewählten Entnahmebehältern (48, 52) in Kontakt zu bringen.

2. Verfahren nach Anspruch 1, dadurch gekennzeichnet, daß zur Ansaugung unterschiedlicher Flüssigkeitsvolumina die ausgewählten Entnahmebehälter ohne eine zwischenzeitliche Entleerung der Pipetten unterschiedlich oft präsentiert werden.

3. Verfahren nach Anspruch 1 oder 2, dadurch gekennzeichnet, daß zur Ansaugung unterschiedlicher Flüssigkeitsvolumina in den ausgewählten Entnahmebehältern unterschiedlich hohe Flüssigkeitsspiegel eingestellt werden, deren Abstand vom vorgegebenen Niveau so gewählt wird, daß sie während des Ansaugens zu unterschiedlichen Zeitpunkten unter das vorgegebene Niveau absinken.

4. Verfahren nach einem der Ansprüche 1 bis 3, dadurch gekennzeichnet, daß die Einstellung unterschiedlicher Flüssigkeitsspiegel (60) durch Anheben der ausgewählten Entnahmebehälter (48) erfolgt.

5. Verfahren nach Anspruch 4, dadurch gekennzeichnet, daß die ausgewählten Entnahmebehälter durch Auftriebskräfte angehoben werden, während die übrigen Entnahmebehälter festgehalten werden.

6. Verfahren nach Anspruch 5, dadurch gekennzeichnet, daß die übrigen Entnahmebehälter durch Magnetkräfte festgehalten werden.

7. Verfahren nach einem der Ansprüche 1 bis 3, dadurch gekennzeichnet, daß die Einstellung unterschiedlicher Flüssigkeitsspiegel (60) durch Absenken der übrigen Entnahmebehälter erfolgt.

8. Verfahren nach einem der Ansprüche 1 bis 3, dadurch gekennzeichnet, daß die Einstellung unterschiedlicher Flüssigkeitsspiegel (60) durch Anheben der Flüssigkeitsspiegel (60) innerhalb der ausgewählten Entnahmebehälter (52) erfolgt.

9. Verfahren nach Anspruch 8, dadurch gekennzeichnet, daß das Anheben der Flüssigkeitsspiegel (60) durch Verdrängen von Flüssigkeit aus einem unteren Teil (74) der ausgewählten Entnahmebehälter (52) erfolgt.

10. Pipettierverfahren zum selektiven Entnehmen von Flüssigkeit aus beliebigen Entnahmebehältern in einer Vielzahl von nebeneinander angeordneten Entnahmebehältern, bei dem ein beweglicher Pipettenträger mit einer Mehrzahl von nebeneinander angeordneten Pipetten, deren Ansaugspitzen sämtlich in einer Ebene liegen, über die Entnahmebehälter bewegt wird, und bei dem zum gleichzeitigen Ansaugen von Flüssigkeit aus frei auswählbaren Entnahmebehältern die Flüssigkeitsspiegel der ausgewählten Entnahmebehälter einerseits und die sämtlich in einer Ebene angeordneten Ansaugspitzen der über die Entnahmebehälter bewegten Pipetten andererseits mindestens bis zum Kontakt der Flüssigkeitsspiegel und der Ansaugspitzen gesteuert aneinander angenähert werden, insbesondere nach einem der Ansprüche 1 bis 11 sowie zur Entnahme einer gleichen Flüssigkeit aus sämtlichen ausgewählten Entnahmebehältern, dadurch gekennzeichnet, daß die ausgewählten Entnahmebehälter (52) vor der Annäherung an die Pipetten (8) selektiv mit der Flüssigkeit geflutet werden.

11. Pipettiervorrichtung zum selektiven Entnehmen von Flüssigkeit aus beliebigen Entnahmebehältern einer Vielzahl von nebeneinander angeordneten Entnahmebehältern, bei der ein beweglicher Pipettenträger mit einer Mehrzahl von nebeneinander angeordneten Pipetten, deren Ansaugspitzen sämtlich in einer Ebene liegen, über die Entnahmebehälter bewegbar ist, und bei der zum gleichzeitigen Ansaugen von Flüssigkeit aus frei auswählbaren Entnahmebehältern eine gesteuerte gegenseitige Annäherung der Flüssigkeitsspiegel der ausgewählten Entnahmebehälter einerseits und der Ansaugspitzen der über die Entnahmebehälter bewegten Pipetten andererseits mindestens bis zum Kontakt der Flüssigkeitsspiegel und der Ansaugspitzen erfolgt, dadurch gekennzeichnet, daß bei den ausgewählten Entnahmebehältern (48, 52) einerseits und bei den übrigen Entnahmebehältern (48, 52) andererseits unterschiedliche Flüssigkeitsspiegel (60) einstellbar sind, die über bzw. unter einem vorgegebenen Niveau (N) liegen, und daß die über die Entnahmebehälter (48, 52) bewegten Pipetten (8) mit ihren Ansaugspitzen (26) gemeinsam auf das vorgegebenen Niveau (N) absenkbar sind, um sie mit der Flüssigkeit in den ausgewählten Entnahmebehältern (48, 52) in Kontakt zu bringen.

12. Vorrichtung nach Anspruch 11, dadurch gekennzeichnet, daß die Anzahl, die Anordnung und die Abstände der Entnahmebehälter (48, 52) in einer Entnahmestation (10) mit denjenigen der Pipetten (8) auf dem Pipettenträger (6) übereinstimmen.

13. Vorrichtung nach Anspruch 11 oder 12, dadurch gekennzeichnet, daß die Einstellung des Flüssigkeitsspiegels (60) bei den ausgewählten Entnahmebehältern (48, 52) rechnergesteuert auf der Grundlage von Positionsdaten von ausgewählten Aufnahmebehältern (42) erfolgt, in welche die jeweils aus den ausgewählten Entnahmebehältern (48, 52) aufgenommene Flüssigkeit abgegeben werden sollen.

14. Vorrichtung nach einem der Ansprüche 11 bis 13, dadurch gekennzeichnet, daß die Entnahmebehälter (48) vertikal beweglich in eine Halterung (46) eingesetzt sind, und daß die Halterung (46) austauschbar über einer Einrichtung (44, 54, 82) zum selektiven Anheben und/oder Absenken der Entnahmebehälter (48, 52) absetzbar ist.

15. Vorrichtung nach einem der Ansprüche 11 bis 14, dadurch gekennzeichnet, daß eine Einrichtung (44, 54, 82) zum selektiven Anheben und/oder Absenken der Entnahmebehälter oder des Flüssigkeitsspiegels (60) innerhalb der Entnahmebehälter (52) einen Hubmechanismus umfaßt, der unterhalb von jedem Entnahmebehälter (48) eine steuerbare Hubeinrichtung (54) aufweist.

16. Vorrichtung nach Anspruch 15, dadurch gekennzeichnet, daß der Hubmechanismus in eine Flüssigkeit eingetauchte Schwimmkörper (120) umfaßt, die jeweils auf einen Entnahmebehälter einwirken und diesen durch Auftriebskräfte anheben.

17. Vorrichtung nach Anspruch 16, dadurch gekennzeichnet, daß der Hubmechanismus Einrichtungen (136, 132, 146, 148) zum Festhalten der Schwimmkörper (120) oder der Entnahmebehälter entgegen der Auftriebskräfte der Schwimmkörper (120) umfaßt.

18. Vorrichtung nach Anspruch 17, dadurch gekennzeichnet, daß die Halteeinrichtungen Elektromagnete (136) umfassen.

19. Pipettiervorrichtung zum selektiven Entnehmen von Flüssigkeit aus beliebigen Entnahmebehältern einer Vielzahl von nebeneinander angeordneten Entnahmebehältern, bei der ein beweglicher Pipettenträger mit einer Mehrzahl von nebeneinander angeordneten Pipetten, deren Ansaugspitzen sämtlich in einer Ebene liegen, über die Entnahmebehälter bewegbar ist, und bei der zum gleichzeitigen Ansaugen von Flüssigkeit aus frei auswählbaren Entnahmebehältern eine gesteuerte gegenseitige Annäherung der Flüssigkeitsspiegel in den ausgewählten Entnahmebehältern einerseits und der Ansaugspitzen der über die Entnahmebehälter bewegten Pipetten andererseits mindestens bis zum Kontakt der Flüssigkeitsspiegel und der Ansaugspitzen erfolgt, insbesondere nach einem der Ansprüche 13 bis 20 sowie zur Entnahme einer gleichen Flüssigkeit aus sämtlichen ausgewählten Entnahmebehältern, gekennzeichnet durch eine Flutungseinrichtung (96) zum selektiven Fluten der ausgewählten Entnahmebehälter (52) vor der Annäherung an die Pipetten (8).
